(19) Europäisches Patentamt / European Patent Office / Office européen des brevets

(11) **EP 4 332 840 A1**

(12) **EUROPEAN PATENT APPLICATION**
published in accordance with Art. 153(4) EPC

(43) Date of publication:
**06.03.2024 Bulletin 2024/10**

(21) Application number: **22794695.1**

(22) Date of filing: **20.04.2022**

(51) International Patent Classification (IPC):
**G06N 10/00** *(2022.01)*

(52) Cooperative Patent Classification (CPC):
**G06N 10/00**

(86) International application number:
**PCT/CN2022/087847**

(87) International publication number:
**WO 2022/228224 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.04.2021 CN 202110471640
30.04.2021 CN 202110479525**

(71) Applicant: **Origin Quantum Computing Technology
(Hefei) Co., Ltd
Hefei, Anhui 230088 (CN)**

(72) Inventors:
• **ZHAO, Dongyi**
  **Hefei, Anhui 230088 (CN)**
• **FANG, Yuan**
  **Hefei, Anhui 230088 (CN)**
• **DOU, Menghan**
  **Hefei, Anhui 230088 (CN)**
• **WANG, Jing**
  **Hefei, Anhui 230088 (CN)**

(74) Representative: **Luppi Intellectual Property S.r.l.
Viale Corassori, 54
41124 Modena (IT)**

(54) **QUANTUM COMPUTING TASK EXECUTION METHOD AND APPARATUS, AND QUANTUM COMPUTER OPERATING SYSTEM**

(57) A quantum computing task execution method and apparatus, and a quantum computer operating system are applied to a first electronic device including a quantum chip. First physical qubits in the quantum chip are assigned to execute a first quantum computing task. The method includes: acquiring a current topological structure of the quantum chip; acquiring a second quantum computing task in a task queue; determining second physical qubits based on the current topological structure and the second quantum computing task, wherein the second physical qubits and the first physical qubits do not interfere with each other; and assigning the second physical qubits to execute the second quantum computing task. According to some embodiments of the present disclosure, parallel computing of a plurality of quantum computing tasks can be realized during quantum computing.

Acquire a current topological structure of the quantum chip — 201

Acquire a second quantum computing task in a task queue — 202

Determine second physical qubits based on the current topological structure and the second quantum computing task, the second physical qubits and the first physical qubits do not interfere with each other — 203

Assign the second physical qubits to execute the second quantum computing task — 204

FIG. 2A

EP 4 332 840 A1

**Description**

CROSS-REFERENCE TO RELATED APPLICATIONS

This application claims priority to Chinese Patent Application No. 202110471640.0, entitled "QUANTUM CIRCUIT REPLACEMENT METHOD AND APPARATUS, MEDIUM, AND QUANTUM COMPUTER OPERATING SYSTEM" and filed with the China Patent Office on April 29, 2021, and Chinese Patent Application No. 202110479525.8, entitled "QUANTUM COMPUTING TASK EXECUTION METHOD AND APPARATUS, AND QUANTUM COMPUTER OPERATING SYSTEM" and filed with the China Patent Office on April 30, 2021, the entire contents of which are incorporated herein by reference thereto.

TECHNICAL FIELD

The present disclosure relates to the technical field of quantum computing, and in particular, to a quantum computing task execution method and apparatus, and a quantum computer operating system.

BACKGROUND

Serial computing and parallel computing are two commonly adopted computing task execution manners in classical computers. The serial computing means that an electronic device schedules computing tasks in a task queue one by one to a processor for computing. The parallel computing means that the electronic device simultaneously schedules a plurality of computing tasks in the task queue to the processor for computing.

However, during quantum computing, when a plurality of quantum computing tasks are executed on a same quantum chip, there may be signal crosstalk between physical qubit regions assigned to execute the plurality of quantum computing tasks, resulting in inaccurate computing results. Therefore, how to realize parallel computing of a plurality of quantum computing tasks during quantum computing is a technical problem to be solved.

SUMMARY

According to some embodiments of the present disclosure, a quantum computing task execution method and apparatus, and a quantum computer operating system are provided to realize parallel computing of a plurality of quantum computing tasks during quantum computing.

In a first aspect, some embodiments of the present disclosure provide a quantum computing task execution method, applied to a first electronic device including a quantum chip, wherein first physical qubits in the quantum chip are assigned to execute a first quantum computing task, and the method includes: acquiring a current topological structure of the quantum chip; acquiring a second quantum computing task in a task queue; determining second physical qubits based on the current topological structure and the second quantum computing task, wherein the second physical qubits and the first physical qubits do not interfere with each other; and assigning the second physical qubits to execute the second quantum computing task.

In some embodiments, at least two first quantum computing tasks are provided, the at least two first quantum computing tasks are executed synchronously on the quantum chip, and the first physical qubits assigned by the first electronic device to each of the first quantum computing tasks do not interfere with each other.

In some embodiments, the determining second physical qubits based on the current topological structure and the second quantum computing task includes: determining a topology subgraph corresponding to qubits required for the second quantum computing task; determining an isomorphic topology subgraph of the topology subgraph in the current topological structure; determining, based on the isomorphic topology subgraph, at least one group of physical qubits mapped in the quantum chip by logical qubits in a quantum circuit; and determining one group from the at least one group of physical qubits as the second physical qubits.

In some embodiments, the determining one group from the at least one group of physical qubits as the second physical qubits includes: determining a total number of physical qubits connected to each group of physical qubits in the at least one group of physical qubits; and taking the group with a minimum total number of connected physical qubits as the second physical qubits.

In some embodiments, prior to the acquiring a second quantum computing task in a task queue, the method further includes: receiving at least two third quantum computing tasks sent by a second electronic device; adding the at least two third quantum computing tasks to the task queue; and determining the second quantum computing task from the at least two third quantum computing tasks based on a number of qubits required and a priority of the quantum computing task, wherein the priority is determined based on a waiting time and an execution time of the quantum computing task.

In some embodiments, the determining the second quantum computing task from the at least two third quantum computing tasks based on a number of qubits required and a priority of the quantum computing task includes: determining the number of qubits required for each of the third quantum computing tasks; determining the third quantum computing task with a minimum number of qubits required as a fourth quantum computing task; determining, if the number of the fourth quantum computing task is one, take the fourth quantum computing task as the second quantum computing task; and determining, if the number of the fourth quantum computing tasks is at least two, take one of the at least two fourth quantum computing tasks with the highest priority as the second quantum computing task.

In some embodiments, prior to the determining second physical qubits based on the current topological structure and the second quantum computing task, the method further includes: taking a quantum circuit of the second quantum computing task as a target quantum circuit, and when the target quantum circuit meets a preset dividing condition, dividing the target quantum circuit into a target number of subcircuits according to a preset dividing rule; and calling, based on a topological sequence of a to-be-replaced subcircuit, a plurality of query processes to perform parallel query in the subcircuits of the target quantum circuit to determine a subcircuit replaceable by the to-be-replaced subcircuit, and replacing the subcircuit by the to-be-replaced subcircuit to obtain a new quantum circuit of the second quantum computing task; and the determining second physical qubits based on the current topological structure and the second quantum computing task includes: determining the second physical qubits based on the current topological structure and the new quantum circuit of the second quantum computing task.

In some embodiments, the dividing the target quantum circuit into a target number of subcircuits according to a preset dividing rule includes: acquiring a number of current idle processes, wherein the number of the current idle processes equals to a number of currently callable query processes; and determining the target number according to a preset dividing unit and/or the number of current idle processes, and dividing the target quantum circuit into the target number of subcircuits.

In some embodiments, the determining the target number according to a preset dividing unit and/or the number of current idle processes includes: calculating a number of first subcircuits corresponding to the target quantum circuit, wherein the target quantum circuit is divided according to the preset dividing unit to obtain the number of first subcircuits; and determining a maximum value between the number of first subcircuits and the number of current idle processes as the target number.

In some embodiments, the dividing the target quantum circuit into the target number of subcircuits includes: dividing the target quantum circuit into the target number of subcircuits, wherein adjacent subcircuits have an overlapping circuit, and a circuit depth of the overlapping circuit is no less than the to-be-replaced subcircuit.

In some embodiments, the method further includes: acquiring a circuit depth of the target quantum circuit, and when the circuit depth of the target quantum circuit is no less than a preset depth threshold, determining that the target quantum circuit meets the preset dividing condition, wherein the preset depth threshold is no less than a preset multiple of a circuit depth of the to-be-replaced subcircuit.

In some embodiments, the calling, based on a topological sequence of a to-be-replaced subcircuit, a plurality of query processes to perform parallel query in the subcircuits to determine the subcircuit replaceable by the to-be-replaced subcircuit includes: determining logic gates in the to-be-replaced subcircuit and corresponding time sequences thereof based on the topological sequence of the to-be-replaced subcircuit; and calling the plurality of query processes to perform parallel query in the subcircuits respectively, according to the logic gates in the to-be-replaced subcircuit and the corresponding time sequences thereof, to determine in the subcircuits the subcircuit replaceable by the to-be-replaced subcircuit.

In a second aspect, some embodiments of the present disclosure provide a quantum computing task execution apparatus, applied to a first electronic device including a quantum chip, wherein first physical qubits in the quantum chip are assigned to execute a first quantum computing task, and the apparatus includes: an acquisition unit configured to acquire a current topological structure of the quantum chip, and acquire a second quantum computing task in a task queue; a determination unit configured to determine second physical qubits based on the current topological structure and the second quantum computing task, wherein the second physical qubits and the first physical qubits do not interfere with each other; and an execution unit configured to assign the second physical qubits to execute the second quantum computing task.

In a third aspect, some embodiments of the present disclosure provide an electronic device, including a processor, a memory, a communication interface, and one or more programs stored in the memory and configured to be executed by the processor, the programs including instructions, when executed, to perform steps in the method in the first aspect of some embodiments of the present disclosure.

In a fourth aspect, some embodiments of the present disclosure provide a computer-readable storage medium, wherein the computer-readable storage medium stores a computer program for electronic data exchange, wherein the computer program causes a computer to perform some or all steps described in the method as described in the first aspect of some embodiments of the present disclosure.

In a fifth aspect, some embodiments of the present disclosure provide a computer program product, wherein the computer program product includes a non-transitory computer-readable storage media storing a computer program, wherein the computer program is operable to cause a computer to perform some or all steps described in the method as described in the first aspect of some embodiments of the present disclosure. The computer program product may be a software installation package.

In a sixth aspect, some embodiments of the present disclosure provide a quantum computer operating system, wherein the quantum computer operating system executes a quantum computing task according to some or all steps as described in the method in the first aspect of some embodiments of the present disclosure.

As above described, in some embodiments of the present disclosure, when the first quantum computing task is executed on the quantum chip, the second physical qubits are determined according to the current topological structure of the quantum chip and the second quantum computing task, and the second physical qubits are assigned to execute the second quantum computing task. Since the second physical qubits and the first physical qubits do not interfere with each other, asynchronous parallelism of the first quantum computing task and the second quantum computing task on a same quantum chip is realized.

These and other aspects of the present disclosure will be more clearly understood in the following description of embodiments.

## BRIEF DESCRIPTION OF DRAWINGS

In order to more clearly illustrate the technical solutions in some embodiments of the present disclosure or the related art, the accompanying drawings used in the description of the embodiments or the related art will be briefly introduced below. It is apparent that, the accompanying drawings in the following description are only some embodiments of the present disclosure, and other drawings can be obtained by those of ordinary skill in the art from the provided drawings without creative efforts.

FIG. 1A is a block diagram of a hardware structure of a computer terminal for a quantum computing task execution method according to some embodiments of the present disclosure;

FIG. 1B is a schematic diagram of graphical display of a quantum circuit according to some embodiments of the present disclosure;

FIG. 2A is a schematic flowchart of a quantum computing task execution method according to some embodiments of the present disclosure;

FIG. 2B is a diagram of a topological structure of a quantum chip according to some embodiments of the present disclosure;

FIG. 2C is a schematic diagram of distribution of first physical qubits and second physical qubits in FIG. 2B according to some embodiments of the present disclosure;

FIG. 2D is another schematic diagram of distribution of first physical qubits and second physical qubits in FIG. 2B according to some embodiments of the present disclosure;

FIG. 2E shows a topology subgraph corresponding to qubits required for a second quantum computing task according to some embodiments of the present disclosure;

FIG. 2F shows two isomorphic topology subgraphs matched by FIG. 2E from FIG. 2B according to some embodiments of the present disclosure;

FIG. 2G shows another topology subgraph corresponding to qubits required for a second quantum computing task according to some embodiments of the present disclosure;

FIG. 2H shows a directed acyclic graph according to some embodiments of the present disclosure;

FIG. 2I is a schematic diagram of a construction process of a maximum subgraph according to some embodiments of the present disclosure;

FIG. 3 is a schematic flowchart of another quantum computing task execution method according to some embodiments of the present disclosure;

FIG. 4 is a schematic flowchart of still another quantum computing task execution method according to some embodiments of the present disclosure;

FIG. 5 is a schematic structural diagram of an electronic device according to some embodiments of the present disclosure;

FIG. 6 is a schematic structural diagram of a quantum computing task execution apparatus according to some embodiments of the present disclosure; and

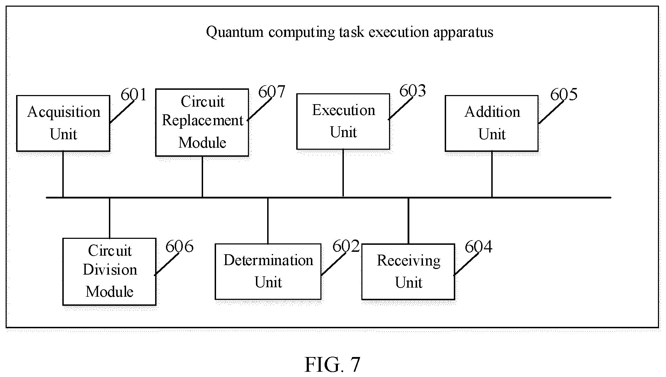

FIG. 7 is a schematic structural diagram of another quantum computing task execution apparatus according to some embodiments of the present disclosure.

## DESCRIPTION OF EMBODIMENTS

In order to enable those skilled in the art to better understand the solutions of the present disclosure, the technical solutions in embodiments of the present disclosure will be clearly and completely described below in conjunction with the accompanying drawings in the embodiments of the present disclosure. It is appreciated that, the described embodiments are merely some of rather than all of the embodiments of the present disclosure. All other embodiments acquired by those of ordinary skill in the art without creative efforts based on the embodiments of the present disclosure shall fall within the protection scope of the present disclosure.

Detailed descriptions are provided below respectively.

In the specification, claims, and the accompanying drawings of the present disclosure, the terms "first", "second", "third", "fourth", and the like are intended to distinguish different objects but do not indicate a particular order. In addition, the terms "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" herein means that a particular characteristic, structure, or feature described with reference to the embodiment may be included in at least one embodiment of the present disclosure. The phrase shown in various locations in the specification may not necessarily refer to a same embodiment, and is not an independent or optional embodiment exclusive from another embodiment. It is explicitly and implicitly understood by those skilled in the art that the embodiments described herein may be combined with another embodiment.

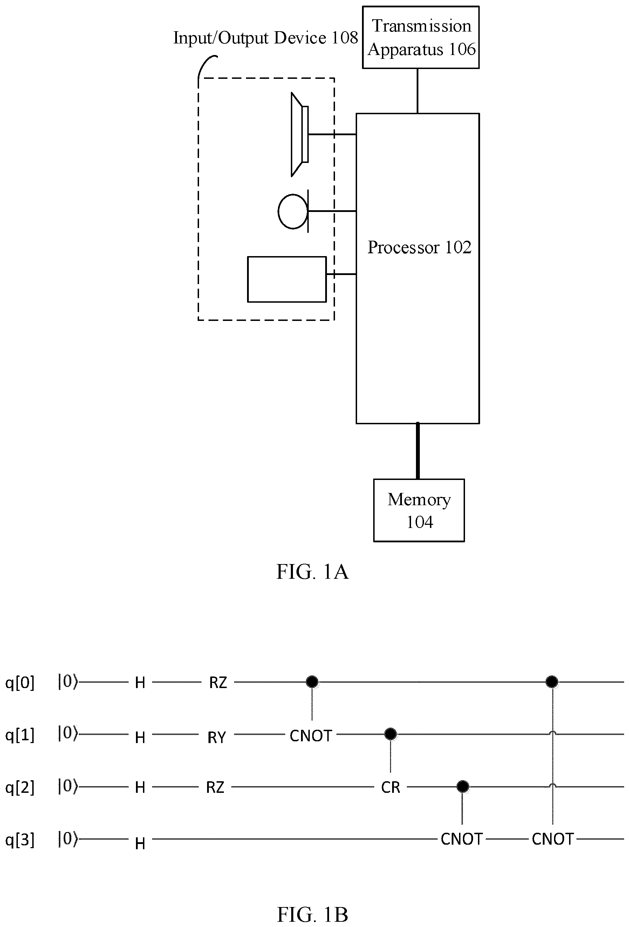

FIG. 1A is a block diagram of a hardware structure of a computer terminal for a quantum computing task execution method according to some embodiments of the present disclosure.

Referring to FIG. 1A, a computer terminal may include one or more (only one is shown in FIG. 1A) processors 102 (the processor 102 may include, but is not limited to, a processing apparatus such as a micro processor (MCU) or a programmable logic device (FPGA)) and a memory 104 configured to store data. In some embodiments, the above computer terminal may also include a transmission apparatus 106 configured for a communication function and an input/output device 108. Those of ordinary skill in the art may understand that the structure shown in FIG. 1A is an example and does not suppose to provide limitation on the structure of the above computer terminal. For example, the computer terminal may also include more or fewer components than those shown in FIG. 1A, or have a configuration different from that shown in FIG. 1A.

The memory 104 may be configured to store a software program of application software and a module, for example, a program instruction/module corresponding to the quantum computing task execution method in some embodiments of the present disclosure. The processor 102 executes various functional applications and data processing by running the software program and the module stored in the memory 104, that is, implementing the foregoing method. The memory 104 may include a high-speed random memory, and may also include a nonvolatile memory such as one or more magnetic storage devices, a flash memory, or another nonvolatile solid-state memory. In some examples, the memory 104 may further include memories remotely disposed relative to the processor 102, and these remote memories may be connected to the computer terminal 10 through a network. Examples of the above network include, but are not limited to, the Internet, an intranet, a local area network, a mobile communications network, or any combination thereof.

The transmission apparatus 106 is configured to receive or transmit data via a network. Specific examples of the network may include a wireless network provided by a communications supplier of the computer terminal 10. In an example, the transmission apparatus 106 includes a network interface controller (NIC) that may be connected to another network device through a base station, thereby communicating with the Internet. In an example, the transmission apparatus 106 may be a radio frequency (RF) module that is configured to communicate with the Internet in a wireless manner.

It is to be noted that the quantum program referred to in some embodiments of the present disclosure is a program written in a classical language to characterize qubits and evolution thereof, in which qubits, quantum logic gates, and the like related to quantum computing all have corresponding classical code expressions.

As an implementation of quantum programs, quantum circuits, also known as quantum logic circuits, are the most commonly used general-purpose quantum computing models, which mean circuits that operate qubits under abstract concepts, and components thereof include qubits, circuits (timelines), and various quantum logic gates. Finally, results are generally required to be read out through quantum measurement operations. The quantum circuit may be displayed as a sequence of quantum logic gates arranged in a certain execution time sequence.

For example, a quantum program may be:

```
QCircuitcir;
cir<<H(q[0])<<H(q[1])<<H(q[2])<<H(q[3])<<RZ(q[0],PI/2)<<RY(q[1],PI/4)<
<RZ(q[2],PI/4)<<CNOT(q[0],q[1])<<CR(q[1],q[2],PI/3)<<CNOT(q[2],q[3])<<CNOT(q[0
```

],q[3]).

A corresponding quantum circuit (denoted as 1# quantum circuit) may be expressed as:

```
q[0]:H(q[0]), RZ(q[0], PI/2)
q[1]: H(q[1]), RY(q[1], PI/4), CNOT(q[0], q[1])
q[2]: H(q[2]), RZ(q[2], -PI/4), CR(q[1], q[2], P1/3)
q[3]: H(q[3]), CNOT(q[2], q[3]), CNOT(q[0], q[3])
```

where q[0], q[1], q[2], q[3] denotes qubits with bits from 0 to 3, which may alternatively be generally denoted as $q_0$, $q_1$, $q_2$, and $q_3$.

As a more vivid display manner, a diagram of the quantum circuit corresponding to the above sequence of quantum logic gates is shown in FIG. 1B.

Unlike traditional circuits, which are connected by metal wires to transmit voltage signals or current signals, in the quantum circuit, the circuit may be regarded as connected by time. That is, the state of qubits evolves naturally with time. In this process, the circuit follows instruction of a Hamiltonian operator, and is operated upon encounter with a quantum logic gate.

A quantum program as a whole corresponds to a total quantum circuit, and the quantum program in the present disclosure refers to the total quantum circuit. The total number of qubits in the total quantum circuit is the same as the total number of qubits in the quantum program. It may be understood that a quantum program may consist of quantum circuits, measurement operations for qubits in quantum circuits, registers for storing measurement results, and control flow nodes (jump instructions). A quantum circuit may include tens, hundreds or even tens of thousands of quantum logic gate operations. An execution process of the quantum program is a process of executing all quantum logic gates according to a certain time sequence. It is to be noted that the "time sequence" refers to a chronological order in which a single-quantum logic gate is executed.

It is to be noted that in classical computing, the most basic unit is a bit, and the most basic control mode is a logic gate. With a combination of logic gates, the purpose of controlling a circuit can be achieved. Similarly, a manner in which the qubits are processed is a quantum logic gate. The use of the quantum logic gates can make quantum states evolve. Accordingly, the quantum logic gates are the basis of the quantum circuits. The quantum logic gates include single-bit quantum logic gates (or single-quantum logic gates, referred to as "single gates"), such as Hadamard gates (H gates), Pauli-X gates (X gates), Pauli-Y gates (Y gates), Pauli-Z gates (Z gates), RX gates, RY gates, RZ gates; two-bit quantum logic gates (or double-quantum logic gates, referred to as "double gates") such as CNOT gates, CR gates, iSWAP gates; and multi-bit quantum logic gates (or multi-quantum logic gates, referred to as "multi-gates") such as Toffoli gates. The quantum logic gates are generally represented by unitary matrices, which are not only in the form of matrices but also an operation or a transformation. Generally, the effect of the quantum logic gate on the quantum state is calculated by left multiplying the unitary matrix by a matrix corresponding to a quantum-state right vector.

For example, a vector corresponding to the quantum-state right vector |0> is $\begin{pmatrix} 1 \\ 0 \end{pmatrix}$, and a vector corresponding to the quantum-state right vector |1> is $\begin{pmatrix} 0 \\ 1 \end{pmatrix}$.

The quantum states are logical states of the qubits. In a quantum algorithm (or quantum program), binary representation is used for quantum states of a group of qubits included in a quantum circuit. For example, if a group of qubits is q0, q1, and q2, which means 0th, 1st, and 2nd qubits, and an order from high to low is q2q1q0 in the binary representation. The number of quantum states corresponding to the group of qubits is 2 to the power of the bit number of the qubits, i.e., 8 eigenstates (definite states), namely: 1000>, |001>, 1010>, |011>, |100>, |101>, 1110>, |111>. The bit of each quantum state corresponds to the qubit. For example, for the |001> state, 001 corresponds to q2q1q0 from high to low, and |> is Dirac notation. For a quantum circuit including N qubits $q_0$, $q_1$, ..., $q_n$, ..., and $q_{N-1}$, an order of bits of quantum states in the binary representation is $q_{N-1}q_{N-2}$..., $q_1q_0$.

Taking a single qubit for description, a logical state $\psi$ of the single qubit may be in a 10> state, a |1> state, or a superposition state (indefinite state) of the 10> state and the |1> state, which may be expressed as $\psi = a|0> +b|1>$, where a and b denote complex numbers representing amplitude of the quantum state (probability amplitude), a square of a modulus of the amplitude represents a probability, a2 and b2 denote probabilities of the logic state being the 10> state and the |1> state respectively, and $|a|2+|b|2=1$. In summary, a quantum state is a superposition state composed of eigenstates. When the probability of other states is 0, the qubit is in the only determined eigenstate.

A quantum computing task execution method according to some embodiments of the present disclosure will be further introduced below with reference to the accompanying drawings.

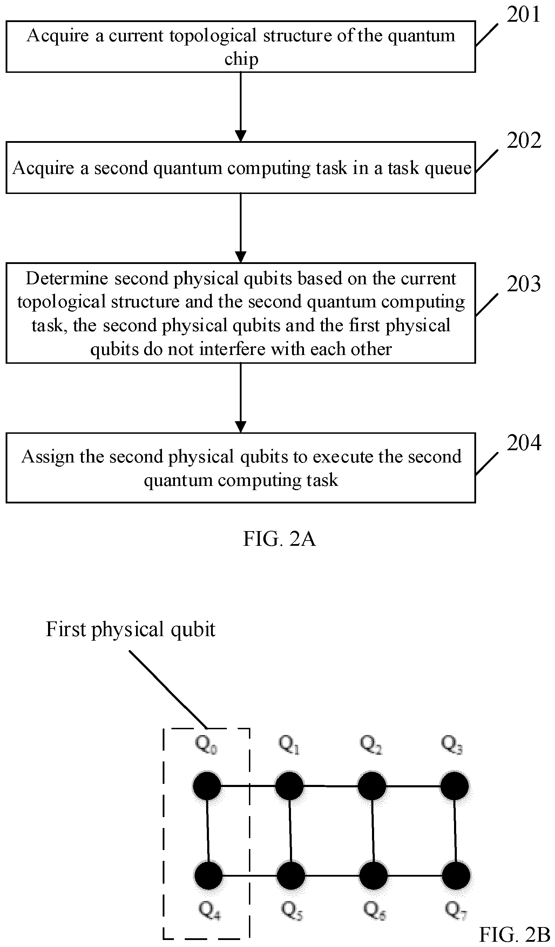

Referring to FIG. 2A, FIG. 2A is a schematic flowchart of a quantum computing task execution method according to some embodiments of the present disclosure, applied to a first electronic device including a quantum chip. First physical qubits in the quantum chip are assigned to execute a first quantum computing task, and the method includes the following steps.

In step 201, a current topological structure of the quantum chip is acquired.

The topological structure of the quantum chip reflects spatial characteristics of physical qubits on the quantum chip. The spatial characteristics include the number and positions of the physical qubits included in the quantum chip, and the connection relationship between the physical qubits, which determines availability of the quantum chip.

The current topological structure of the quantum chip includes information of the physical qubits currently available on the quantum chip, for example, including the number of the physical qubits currently available, and positions and the connection relationship thereof. The information may be determined based on usage of the physical qubits on the quantum chip. The usage of the physical qubits on the quantum chip includes, for example, occupation of the physical qubits, availability determined by fidelity of the physical qubits, and the like.

In step 202, a second quantum computing task in a task queue is acquired.

Types of quantum computing tasks include a specified bit type and an unspecified bit type. A quantum computing task of the specified bit type has a higher priority than a quantum computing task of the unspecified bit type. If the quantum computing tasks are all belonging to the specified bit type, priorities of the quantum computing tasks are determined according to a first-come-first-service principle. If the quantum computing tasks are all belonging to the unspecified bit type, the priorities of the quantum computing tasks are determined according to a highest response ratio next (HRRN) principle.

The HRRN principle is a principle to determine an order of priorities of tasks according to a HRRN algorithm, in which a priority of a quantum computing task in the task queue may increase as the waiting time increases.

$$\text{response ratio} = \frac{\text{response time}}{\text{execution time}} = \frac{\text{waiting time} + \text{execution time}}{\text{execution time}}$$

The quantum computing task in the task queue includes the first quantum computing task and the second quantum computing task, and the priority of the first quantum computing task is higher than that of the second quantum computing task. The first quantum computing task may be of the specified bit type, and the second quantum computing task may belong to the unspecified bit type. Both the first quantum computing task and the second quantum computing task may alternatively belong to the unspecified bit type. A response ratio of the first quantum computing task is higher than that of the second quantum computing task.

It is to be noted that, the following situation is not taken into account: both the first quantum computing task and the second quantum computing task may belong to the specified bit type, a receiving time of the first quantum computing task precedes that of the second quantum computing task (that is, according to the above first-come-first-service principle, the first quantum computing task comes first, and the second quantum computing task comes later). In some embodiments of the present disclosure, the second quantum computing task belongs to the unspecified bit type. This is because, if the second quantum computing task belongs to the specified bit type, there is no need to determine second physical qubits, and specified bits are directly used as the second physical qubits to execute the second quantum computing task.

In step 203, second physical qubits are determined based on the current topological structure and the second quantum computing task, the second physical qubits and the first physical qubits do not interfere with each other.

One or more first physical qubits may be provided, and one or more second physical qubits may also be provide; one or more first quantum computing tasks may be provided, and one or more second quantum computing tasks may also be provided, all of which are not limited herein.

Further, a specific implementation manner of "the second physical qubits and the first physical qubits do not interfere with each other" is: a geometric distance between the second physical qubits and the first physical qubits being greater than or equal to a preset distance.

The preset distance may be a minimum interference-free distance determined in an experiment. The preset distance may be, for example, a distance of one physical qubit, a distance of two physical qubits, or the like.

For example, as shown in FIG. 2B, FIG. 2B is a diagram of a topological structure of a quantum chip according to some embodiments of the present disclosure. The quantum chip includes eight physical qubits, which are Q0, Q1, Q2, Q3, Q4, Q5, Q6, and Q7 respectively. The topological structure is shown in the figure. A number of bits required for the first quantum computing task is 2. Q0 and Q4 are assigned to execute the first quantum computing task. Q0 and Q4 are the first physical qubits. The number of bits required for the second quantum computing task is 4. The second quantum computing task belongs to the unspecified bit type.

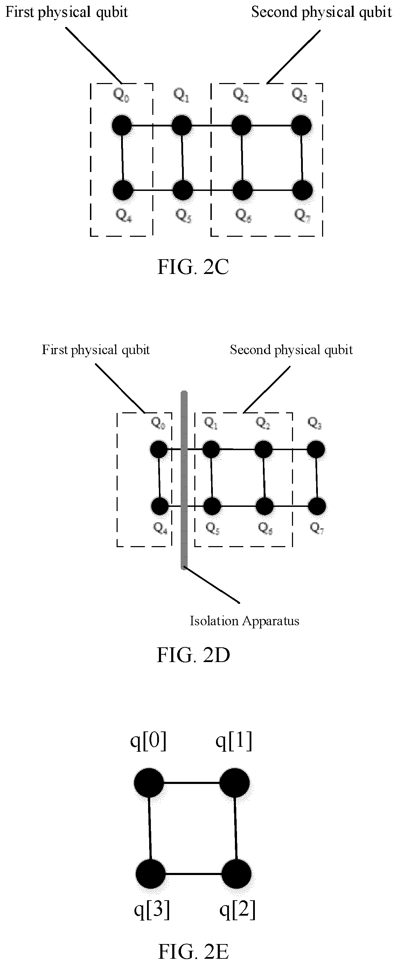

FIG. 2C is a schematic diagram of distribution of first physical qubits and second physical qubits in FIG. 2B according to some embodiments of the present disclosure. In order to prevent mutual interference between the first physical qubits and the second physical qubits, a first electronic device is arranged apart by one physical qubit. Q2, Q3, Q6, and Q7 are determined as the second physical qubits to execute the second quantum computing task.

Further, another specific implementation manner of "the second physical qubits and the first physical qubits do not interfere with each other" is: an isolation apparatus being provided between the second physical qubits and the first physical qubits. The isolation apparatus is configured to isolate the first physical qubits from the second physical qubits to prevent mutual interference between the first physical qubits and the second physical qubits.

For example, as shown in FIG. 2D, FIG. 2D is another schematic diagram of distribution of first physical qubits and second physical qubits in FIG. 2B according to some embodiments of the present disclosure. In order to prevent mutual interference between the first physical qubits and the second physical qubits, the first electronic device is provided with an isolation apparatus between Q0, Q4 and Q1, Q5. Q1, Q2, Q5, and Q6 are determined as the second physical qubits to execute the second quantum computing task.

In step 204, the second physical qubits are assigned to execute the second quantum computing task.

The assigning the second physical qubits to execute the second quantum computing task includes: determining a quantum circuit corresponding to the second quantum computing task; mapping logical qubits in the quantum circuit to the second physical qubits; processing the quantum circuit based on the second physical qubits to obtain an executable quantum circuit; and running the executable quantum circuit on the second physical qubits.

The quantum computing tasks are generally represented by quantum circuits. The executable quantum circuit is a quantum circuit composed of quantum logic gates that may be executed directly on the quantum chip. During implementation of the quantum algorithm, a developer mainly focuses on the implementation of quantum algorithm, and the quantum circuit generally includes quantum logic gates not supported by the quantum chip. Therefore, during actual operation, there is a need to convert the quantum logic gates not supported by the quantum chip into quantum logic gates supported by the quantum chip, and the quantum circuit corresponding to the quantum computing task is processed to obtain the executable quantum circuit.

As above described, in some embodiments of the present disclosure, when the first quantum computing task is executed on the quantum chip, the second physical qubits are determined according to the current topological structure of the quantum chip and the second quantum computing task, and the second physical qubits are assigned to execute the second quantum computing task. Since the second physical qubits and the first physical qubits do not interfere with each other, asynchronous parallelism of the first quantum computing task and the second quantum computing task on a same quantum chip is realized.

In some embodiments of the present disclosure, at least two first quantum computing tasks are provided, the at least two first quantum computing tasks are executed synchronously on the quantum chip, and the first physical qubits assigned by the first electronic device to each of the first quantum computing tasks do not interfere with each other.

It is to be noted that "the first physical qubits assigned by the first electronic device to each of the first quantum computing tasks do not interfere with each other" may also be implemented by arranging an isolation apparatus or implemented by arranging the first physical qubits apart by a preset distance. Details are not described herein again.

As above described, in some embodiments of the present disclosure, synchronous parallelism of a plurality of first quantum computing tasks on a same quantum chip is realized by arranging the first physical qubits assigned to each of the first quantum computing tasks on physical qubits that do not interfere with each other.

In some embodiments of the present disclosure, the determining second physical qubits based on the current topological structure and the second quantum computing task includes: determining a topology subgraph corresponding to qubits required for the second quantum computing task; determining an isomorphic topology subgraph of the topology subgraph in the current topological structure; determining, based on the isomorphic topology subgraph, at least one group of physical qubits mapped in the quantum chip by logical qubits in a quantum circuit; and determining one group from the at least one group of physical qubits as the second physical qubits.

Further, a specific implementation manner of "determining a topology subgraph corresponding to qubits required for the second quantum computing task" is: constructing a quantum connected topology graph of the second quantum computing task, the quantum connected topology graph includes a plurality of topological nodes and a connecting line between two topological nodes, and the topological nodes are used to represent logical qubits in the quantum circuit corresponding to the second quantum computing task; the connecting line is used to represent a quantum logic gate between two logical qubits; and taking the quantum connected topology graph as the topology subgraph corresponding to the qubits required for the second quantum computing task.

For example, it is assumed that the quantum circuit corresponding to the second quantum computing task is:

```
q[0]:H(q[0]), RZ(q[0], PI/2)
q[1]: H(q[1]), RY(q[1], PI/4), CNOT(q[0], q[1])
 q[2]: H(q[2]), RZ(q[2],-PI/4), CR(q[1], q[2], Pl/3)
q[3]: H(q[3]), CNOT(q[2], q[3]), CNOT(q[0], q[3])
```

The topology subgraph corresponding to the qubits required for the second quantum computing task may be obtained according to the above method for constructing, through the quantum connected topology graph, the topology subgraph corresponding to the qubits required for the second quantum computing task, as shown in FIG. 2E.

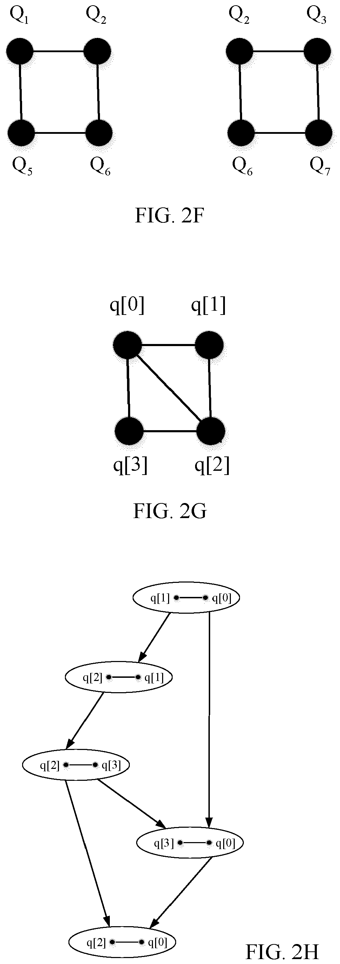

Two isomorphic topology subgraphs may be matched by traversal query of FIG. 2E in FIG. 2B, as shown in FIG. 2F. Two groups of physical qubits may be obtained according to the two isomorphic topology subgraphs, which are Q1, Q2, Q5, Q6 and Q2, Q3, Q6, Q7 respectively. Each group of physical qubits has eight mapping manners. One group of physical qubits is randomly selected from the above two groups of physical qubits as the second physical qubits.

It is to be noted that, as mentioned above, during the implementation of the quantum algorithm, the developer mainly focuses on the implementation of the quantum algorithm, and the quantum circuit generally includes quantum logic gates not supported by the quantum chip. If the quantum circuit includes the quantum logic gates not supported by the quantum chip, the method of determining the topology subgraph corresponding to the qubits required for the second quantum computing task is no longer applicable.

For example, the second quantum computing task is QCircuitcir;

```
cir<<H(q[0])<<H(q[1])<<H(q[2])<<H(q[3])<<RZ(q[0],PI/2)<<RY(q[1],PI/4)<
<RZ(q[2],PI/4)<<CNOT(q[0],q[1])<<CR(q[1],q[2],PI/3)<<CNOT(q[2],q[3])<<CNOT(q[0
],q[3])<<CNOT(q[0],q[2]).
```

The quantum circuit corresponding to the second quantum computing task is:

```
q[0]:H(q[0]), RZ(q[0], PI/2)
q[1]: H(q[1]), RY(q[1], PI/4), CNOT(q[0], q[1])
 q[2]: H(q[2]), RZ(q[2],-PI/4), CR(q[1],q[2],PI/3), CNOT(q[0], q[2])
q[3]: H(q[3]), CNOT(q[2], q[3]), CNOT(q[0], q[3])
```

The quantum circuit includes a quantum logic gate CNOT(q[0], q[2]) not supported by the quantum chip, and then the topology subgraph corresponding to the qubits required for the second quantum computing task obtained according to the above method for constructing, through the quantum connected topology graph, the topology subgraph corresponding to the qubits required for the second quantum computing task is as shown in FIG. 2G. FIG. 2G cannot match any isomorphic topology subgraph in FIG. 2B. However, in fact, CNOT(q[0], q[2]) may be converted, through a SWAP gate, into a quantum logic gate supported by the quantum chip, so that the quantum circuit can run on the quantum chip.

In the following, some embodiments of the present disclosure provide another method for determining the topology subgraph corresponding to the qubits required for the second quantum computing task.

Further, another specific implementation manner of "determining a topology subgraph corresponding to qubits required for the second quantum computing task" is: determining a quantum circuit corresponding to the second quantum computing task; constructing a directed acyclic graph of the quantum circuit; traversing the directed acyclic graph to obtain a maximum subgraph sequence; determining isomorphic maximum subgraphs of maximum subgraphs in the maximum subgraph sequence; and combining the isomorphic maximum subgraphs to obtain the topology subgraph corresponding to the qubits required for the second quantum computing task.

For example, the constructing a directed acyclic graph of the quantum circuit includes: acquiring a quantum logic gate in the quantum circuit; and constructing the directed acyclic graph based on the quantum logic gate, the directed acyclic graph includes a node and a directed edge; the node includes two points and an edge, the two points are used to represent two logical qubits corresponding to the quantum logic gate, and the edge is used to represent a quantum logic gate acting on the two logical qubits; and the directed edge is used to represent dependence of the quantum logic gate on a quantum-state evolution time sequence of the logical qubits.

It is to be noted that, if the quantum circuit includes a single-quantum logic gate, a two-quantum logic gate, and a multi-quantum logic gate, firstly, the multi-quantum logic gate is converted into a single-quantum logic gate and a two-quantum logic gate, then, the single-quantum logic gate obtained after conversion and the single-quantum logic gate existing in the quantum circuit prior to conversion are deleted, at the same time, information thereof such as positions, logic gates, and action bits is recorded in the quantum program for subsequent restoration and construction of the quantum circuits, and then the directed acyclic graph is constructed based on the two-quantum logic gate obtained after conversion and the two-quantum logic gate existing in the quantum circuit prior to conversion. The existence of the single-quantum logic gate in the directed acyclic graph does not affect construction of the maximum subgraph. The maximum subgraph obtained through a directed acyclic graph with a single-quantum logic gate is the same as the maximum subgraph obtained through a directed acyclic graph without a single-quantum logic gate. Therefore, the single-quantum logic gate is deleted here for simplicity.

For example, the traversing the directed acyclic graph to obtain a maximum subgraph sequence includes:

determining a first node in the directed acyclic graph, an in-degree of the first node is 0; generating a first subgraph based on the first node; deleting the first node to obtain a new directed acyclic graph; determining whether a second node exists in the directed acyclic graph, an in-degree of the second node is 0; determining the first subgraph as a maximum subgraph if the second node does not exist in the directed acyclic graph; and arranging the maximum subgraph in order of generation to obtain the maximum subgraph sequence.

Further, the method further includes: determining a priority of the second node if the second node exists in the directed acyclic graph, the second node includes two points and an edge, the two points are used to represent two logical qubits in the quantum circuit, and the edge is used to represent a quantum logic gate acting on the two logical qubits; determining the priority of the second node based on the two points, the edge, and the first subgraph; and generating a maximum subgraph based on the priority of the second node and the second node.

Further, the generating a maximum subgraph based on the priority of the second node and the second node includes: if the priority of the second node is a first priority, expanding the first subgraph into a second subgraph based on the second node, and taking the second subgraph as a new first subgraph; and deleting the second node to obtain a new directed acyclic graph again, and then performing the step of determining whether a second node exists in the directed acyclic graph.

Further, the method further includes: if the priority of the second node is a second priority, taking the second node as a new first node, and then performing the step of generating a first subgraph based on the first node, the first priority is greater than the second priority.

Further, prior to the taking the second node as a new first node, the method further includes: deleting the second node whose priority is the first priority, and determining the new first subgraph as the maximum subgraph.

Further, the first priority includes a first subpriority and a second subpriority, and the second priority includes a third subpriority and a fourth subpriority; and the determining a priority of the second node includes: determining the priority of the second node as the fourth subpriority if the two points and the edge do not exist in the first subgraph; determining the priority of the second node as the third subpriority if the two points and the edge do not exist in the first subgraph; determining the priority of the second node as the fourth subpriority if the two points exist and the edge does not exist in the first subgraph; and determining the priority of the second node as the first subpriority if the two points and the edge exist in the first subgraph.

The priorities are the first subpriority, the second subpriority, the third subpriority, and the fourth subpriority in descending order.

For example, for the quantum circuit corresponding to the second quantum computing task,

```
q[0]:H(q[0]), RZ(q[0], PI/2)
 q[1]: H(q[1]), RY(q[1], PI/4), CNOT(q[0], q[1])
q[2]: H(q[2]), RZ(q[2],-PI/4), CR(q[1],q[2],PI/3), CNOT(q[0], q[2])
q[3]: H(q[3]), CNOT(q[2], q[3]), CNOT(q[0], q[3])
```

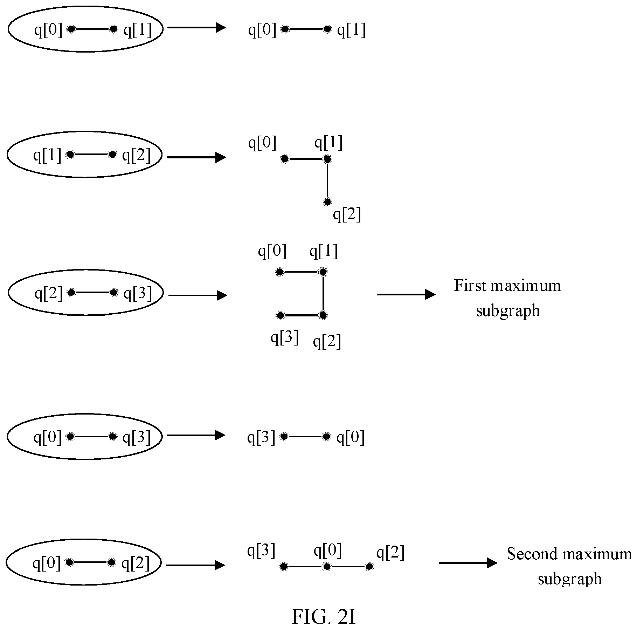

The directed acyclic graph of the quantum circuit may be constructed according to the above method, as shown in FIG. 2H, 2 maximum subgraphs may be obtained according to the above method, which are respectively a first maximum subgraph composed of q[0], q[1], q[2], and q[3] and a second maximum subgraph composed of q[0], q[2], and q[3]. The first maximum subgraph and the second maximum subgraph form a maximum subgraph sequence, as shown in FIG. 2I. FIG. 2I is a schematic diagram of a construction process of a maximum subgraph according to some embodiments of the present disclosure.

A plurality of isomorphic maximum subgraphs of the first maximum subgraph and a plurality of isomorphic maximum subgraphs of the second maximum subgraph may be obtained by matching the first maximum subgraph and the second maximum subgraph respectively in FIG. 2B. The topology subgraph corresponding to the qubits required for the second quantum computing task may be formed by selecting one from each of the plurality of isomorphic maximum subgraphs of the first maximum subgraph and the plurality of isomorphic maximum subgraphs of the second maximum subgraph.

Since a corresponding relationship between logical qubits and physical qubits has been determined when the isomorphic maximum subgraph of the maximum subgraph is constructed above, a corresponding relationship between logical qubits and physical qubits in the topology subgraph is also determined herein. That is, an isomorphic topology subgraph is also determined.

In some embodiments of the present disclosure, the determining one group from the at least one group of physical qubits as the second physical qubits includes: determining a total number of physical qubits connected to each group of physical qubits in the at least one group of physical qubits; and taking the group with a minimum total number of connected physical qubits as the second physical qubits.

For a one-dimensional quantum chip structure, except for physical qubits at two ends that are only connected to one physical qubit, other physical qubits are connected to two physical qubits. Therefore, when the physical qubits at the two ends are available, physical qubits are first assigned from one end. For two-dimensional and three-dimensional quantum chip structures, physical qubits on edges are connected to a minimum number of other physical qubits, and available physical qubits on the edges are first assigned.

As above described, in this embodiment, according to the method for first assigning physical qubits on the edges, a quantum computing task requiring a corresponding number of physical qubits being not supported when the number of available physical qubits is sufficient caused by division of available physical qubits on the quantum chip into a plurality of small disconnected blocks can be prevented, thereby improving usage efficiency of computing resources.

In some embodiments of the present disclosure, prior to the acquiring a second quantum computing task in a task queue, the method further includes: receiving at least two third quantum computing tasks sent by a second electronic device; adding the at least two third quantum computing tasks to the task queue; and determining the second quantum computing task from the at least two third quantum computing tasks based on a number of qubits required and a priority of the quantum computing task, the priority is determined based on a waiting time and an execution time of the quantum computing task.

The at least two third quantum computing tasks are of the unspecified bit type, the at least two third quantum computing tasks may be sent simultaneously by the second electronic device or sent one by one by the second electronic device, and one or more second electronic devices may be provided, which are not limited herein.

The number of logical qubits included in the quantum circuit corresponding to the quantum computing task is the number of bits required for the quantum computing task, which represents the number of physical qubits required for the quantum chip to execute the quantum computing task. The priority represents an order in which quantum computing tasks are executed in the task queue. Since the at least two third quantum computing tasks belong to the unspecified bit type, their priorities are determined according to the HRRN principle. A response ratio is determined based on the waiting time and the execution time of the quantum computing task.

In some embodiments of the present disclosure, the determining the second quantum computing task from the at least two third quantum computing tasks based on a number of qubits required and a priority of the quantum computing task includes: determining the number of qubits required for each of the third quantum computing tasks; determining the third quantum computing task with a minimum number of qubits required as a fourth quantum computing task; determining, if the number of the fourth quantum computing task is one, take the fourth quantum computing task as the second quantum computing task; and determining, if the number of the fourth quantum computing tasks is at least two, take one of the at least two fourth quantum computing tasks with the highest priority as the second quantum computing task.

As above described, in some embodiments of the present disclosure, the third quantum computing task with a minimum number of qubits required is determined as the fourth quantum computing task, when the number of the fourth quantum computing task is one, the fourth quantum computing task is determined as the second quantum computing task, and the smaller the number of bits required, the easier it is to match an isomorphic topology subgraph in the current topological structure, so as to speed up the matching, thereby facilitating scheduling of the quantum computing tasks in the task queue, and improving utilization efficiency of quantum computing resources.

When the number of the fourth quantum computing tasks is at least two, the second quantum computing task is determined according to the priority. A method for determining the second quantum computing task is provided, which takes into account both the waiting time of the quantum computing task and the execution time of the quantum computing task, considers a quantum computing task with a shorter execution time, and does not make a quantum computing task with a longer execution time wait too long.

In order to make the quantum circuit of the above second quantum computing task meet a specific condition, such as simplifying the quantum circuit or making the quantum circuit run on a certain quantum chip, a certain subcircuit of the quantum circuit is required to be replaced, for example, with a more simplified quantum circuit or a quantum circuit meeting a certain preset requirement. For the convenience of description, the above specific quantum circuit that can replace a certain subcircuit in the quantum circuit to simplify the quantum circuit or meets a certain preset requirement is called the to-be-replaced subcircuit. To this end, some embodiments of the present disclosure provide another quantum computing task execution method.

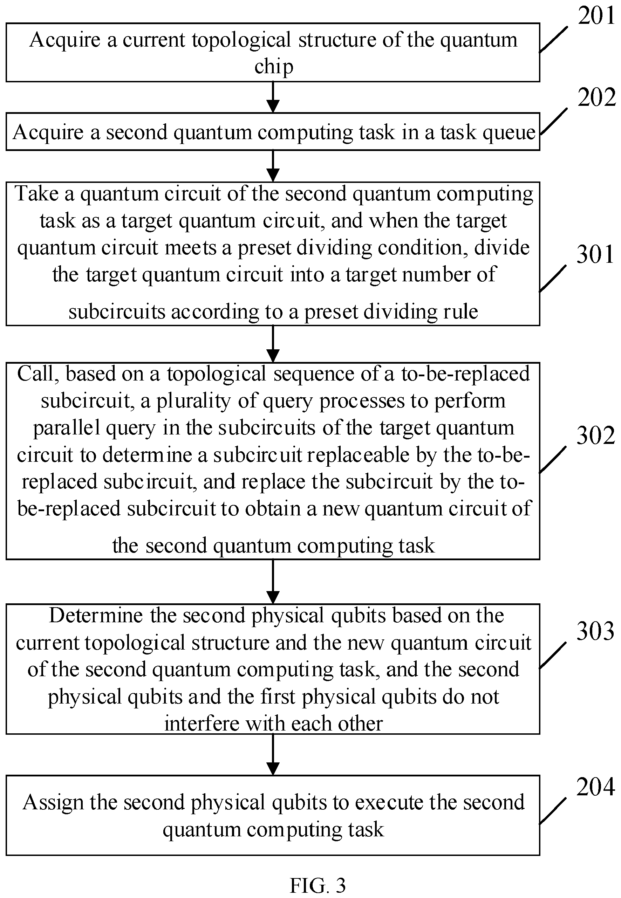

Referring to FIG. 3, FIG. 3 is a schematic flowchart of another quantum computing task execution method according to some embodiments of the present disclosure, which is mainly different from the method shown in FIG. 2A in that step 301 to step 302 are added between step 202 and step 203, and step 203 is adaptively modified to step 303. The method includes the following steps.

In step 301, a quantum circuit of the second quantum computing task is taken as a target quantum circuit, and when the target quantum circuit meets a preset dividing condition, the target quantum circuit is divided into a target number of subcircuits according to a preset dividing rule.

In this embodiment, when the target quantum circuit meets the preset dividing condition, the target quantum circuit may be divided into the target number of subcircuits according to the preset dividing rule.

In some embodiments, the step of dividing the target quantum circuit into a target number of subcircuits according to a preset dividing rule includes: acquiring a number of current idle processes, the number of the current idle processes equals to a number of currently callable query processes; and determining the target number according to a preset dividing unit and/or the number of current idle processes, and dividing the target quantum circuit into the target number of subcircuits.

In this embodiment, the preset dividing rule may be to divide the target quantum circuit according to preset dividing units (such as 1024 layers or 1k layers) or to divide the target quantum circuit according to the number of currently callable query processes in a running environment of the quantum program corresponding to the target quantum circuit. In an embodiment, the target quantum circuit may be divided according to the preset dividing rule or the target quantum circuit may be divided according to the number of current idle processes, and a user may perform settings according to an actual requirement. A layer refers to a (layer) time sequence, and a layer of logic gates are logic gates that can be executed simultaneously and is located in a time sequence. A same layer of logic gates are logic gates in a same time sequence that can be executed simultaneously. The layer is a unit of a depth of the quantum circuit. Two quantum circuits with a same depth are two quantum circuits of a same layer. The target quantum circuit is divided as follows: the 1024-layer or 1k-layer logic gates of the target quantum circuit are acquired sequentially from left to right as a single-block subcircuit.

The step of determining the target number according to a preset dividing unit and/or the number of current idle processes includes: calculating a number of first subcircuits corresponding to the target quantum circuit, the target quantum circuit is divided according to the preset dividing unit to obtain the number of first subcircuits; and determining a maximum value between the number of first subcircuits and the number of current idle processes as the target number.

In this embodiment, the maximum value between the number of first subcircuits obtained by division according to the preset dividing unit and the number of current idle processes may be determined as the target number. That is, when the number of first subcircuits is greater than the number of current idle processes, the number of first subcircuits is taken as the target number. When the number of first subcircuits is less than the number of current idle processes, the number of current idle processes is taken as the target number.

For example, it can be seen from actual measurements that when the system queries for subcircuits corresponding to the preset dividing unit (such as 1024 layers or 1k layers), both memory resources and processor resources may be taken into account, and query efficiency is high. Then, the system may call current idle query processes (that is, query processes corresponding to the number of current idle processes) to perform parallel query on the plurality of subcircuits obtained after dividing. The target quantum circuit is divided according to the preset dividing unit to obtain the number of first subcircuits, and then the number of first subcircuits is compared with the number of current idle processes. If the number of first subcircuits is greater than the number of current idle processes, depths of subcircuits obtained by dividing the target quantum circuit according to the number of current idle processes may exceed the preset dividing unit. That is, the subcircuits obtained above may occupy a lot of memory. In order to prevent occupation of excessive memory by the subcircuits obtained after dividing, when the number of first subcircuits is greater than the number of current idle processes, the number of first subcircuits is selected as the target number. That is, the target quantum circuit is divided, according to the preset dividing unit, into subcircuits whose number equals to the number of first subcircuits (the target number). If the number of first subcircuits is less than the number of current idle processes, it indicates that the depths of the subcircuits obtained by dividing the target quantum circuit according to the number of current idle processes do not exceed the preset dividing unit. In order to further improve circuit query efficiency and make full use of the current idle processes for parallel query, the number of current idle processes may be taken as the target number, and the target quantum circuit may be divided into subcircuits whose number equals to the number of current idle processes (the target number).

Prior to step 301, the method may further include: acquiring a circuit depth of the target quantum circuit, and when the circuit depth of the target quantum circuit is no less than a preset depth threshold, determining that the target quantum circuit meets the preset dividing condition, the preset depth threshold is no less than a preset multiple of a circuit depth of the to-be-replaced subcircuit.

In this embodiment, the preset dividing condition is the circuit depth of the target quantum circuit being no less than the preset depth threshold. In order to improve query efficiency, the target quantum circuit exceeding the preset depth threshold is divided, and then parallel search is performed on the subcircuits through a plurality of query processes. That is, parallel search is performed in the subcircuits for the to-be-replaced subcircuit to confirm the subcircuit that may be replaced with the to-be-replaced subcircuit. However, when the target quantum circuit does not exceed the preset depth threshold, for example, 2 times the circuit depth of the to-be-replaced subcircuit, and the target quantum circuit is divided, a problem of division of the to-be-replaced subcircuit in the target quantum circuit may inevitably arise. Therefore, in this embodiment, the circuit depth of the target quantum circuit is compared with the preset multiple (no less than 2 times, such as 2 times or 3 times) of the circuit depth of the to-be-replaced subcircuit, and when the circuit depth of the target quantum circuit is greater than 3 times the circuit depth of the target quantum circuit, it is determined that the target quantum circuit meets the preset dividing condition. Otherwise, it is determined that the target quantum circuit does not meet the preset dividing condition.

In some embodiments, the step of dividing the target quantum circuit into the target number of subcircuits includes: dividing the target quantum circuit into the target number of subcircuits, wherein adjacent subcircuits have an overlapping circuit, and a circuit depth of the overlapping circuit is no less than the to-be-replaced subcircuit.

In this embodiment, if the to-be-replaced subcircuit is divided in the target quantum circuit, a complete to-be-replaced subcircuit cannot be found in the subcircuits obtained after dividing. In order to prevent the above problem, when the target quantum circuit is divided, a partial overlapping circuit is reserved between subcircuits, and a depth of the overlapping circuit is no less than that of the to-be-replaced subcircuit. Therefore, the problem of failure of a dividing query algorithm caused by dividing of the to-be-replaced subcircuit in the subcircuits obtained after dividing and optimization can be prevented through the overlapping circuit.

Further, if the adjacent subcircuits do not have any overlapping circuit, when the to-be-replaced subcircuit is divided during the division of the target quantum circuit, N parts of subcircuits obtained after the to-be-replaced subcircuit is divided may be sequentially queried for and determined by fragmented query.

In this embodiment, a plurality of query processes are called, the subcircuits obtained after division of the target quantum circuit are queried in parallel for a first-part subcircuit of the to-be-replaced subcircuit. When a first related circuit matching the first-part subcircuit is found in a certain subcircuit, it is judged whether a circuit tail end of the first related circuit is a circuit tail end of the subcircuit.

If the circuit tail end of the first related circuit is a circuit tail end of the subcircuit, a circuit head end of an adjacent subcircuit of the subcircuit is further queried for a second related circuit matching a second-part subcircuit of the to-be-replaced subcircuit. If the circuit head end of the adjacent subcircuit has the second related circuit, it is further judged whether a circuit tail end of the second related circuit is a circuit tail end of the to-be-replaced subcircuit. If yes, the to-be-replaced subcircuit is determined. If not, it is judged whether the circuit tail end of the second related circuit is a circuit tail end of the adjacent subcircuit. The rest may be done by analogy, until the to-be-replaced subcircuit is determined.

In step 302, based on a topological sequence of a to-be-replaced subcircuit, a plurality of query processes are called to perform parallel query in the subcircuits of the target quantum circuit to determine a subcircuit replaceable by the to-be-replaced subcircuit, and replace the subcircuit by the to-be-replaced subcircuit to obtain a new quantum circuit of the second quantum computing task.

In this embodiment, all logic gates corresponding to the to-be-replaced subcircuit and corresponding time sequences thereof are acquired based on the topological sequence of the to-be-replaced subcircuit, and based on the topological sequence of the target quantum circuit, the subcircuits are searched for a subcircuit matching quantum logic gates in the to-be-replaced subcircuit and corresponding time sequences thereof, and the matching subcircuit (i.e., the to-be-replaced subcircuit) is replaced in the target quantum circuit. The topological sequence includes the logic gates in the to-be-replaced subcircuit and the corresponding time sequences thereof.

In some embodiments, the step of calling, based on a topological sequence of a to-be-replaced subcircuit, a plurality of query processes to perform parallel query in the subcircuits to determine the to-be-replaced subcircuit includes: determining logic gates in the to-be-replaced subcircuit and corresponding time sequences thereof based on the topological sequence; and calling the plurality of query processes to perform parallel query in the subcircuits respectively, according to the logic gates in the to-be-replaced subcircuit and the corresponding time sequences thereof, to determine the to-be-replaced subcircuit in the subcircuits.

In this embodiment, the logic gates of the to-be-replaced subcircuit and the corresponding time sequences thereof, that is, all the logic gates of to-be-replaced subcircuit and a chronological order in which a single-quantum logic gate in all the logic gates is executed, are acquired in the topological sequence, and then the plurality of query processes are called, according to the logic gates of the to-be-replaced subcircuit and the corresponding time sequences thereof, to perform parallel query in the subcircuits to determine, in the subcircuits, a subcircuit matching all the logic gates of to-be-replaced subcircuit and the time sequences corresponding to all the logic gates.

It is to be noted that a manner of querying for a subcircuit to determine the to-be-replaced subcircuit in each query process may alternatively be: acquiring one of the subcircuits as a target subcircuit, and acquiring a logic gate in the to-be-replaced subcircuit as a target logic gate; querying, through one of the query processes, whether the target subcircuit has a subcircuit matching the target logic gate and a subsequent sequential logic gate corresponding thereto; and if yes, updating the target subcircuit according to the subcircuit corresponding to the target logic gate and the subsequent sequential logic gate corresponding thereto, updating the target logic gate according to a logic gate in the subsequent sequential logic gate, and going back to perform the step of querying whether the target subcircuit has a subcircuit matching the target logic gate and a subsequent sequential logic gate corresponding thereto, until the to-be-replaced subcircuit is determined.

In this embodiment, after the target quantum circuit is divided into subcircuits, the current idle query process in the system may be called to perform parallel query on the subcircuits. A specific process of querying for, by each query process, a subcircuit to determine the to-be-replaced subcircuit is: acquiring a subcircuit from the subcircuits corresponding to the target quantum circuit as a target subcircuit, and then acquiring a logic gate in the to-be-replaced subcircuit as a target logic gate; then acquiring, from the to-be-replaced subcircuit, a subsequent sequential logic gate corresponding to the target logic gate, wherein the subsequent sequential logic gate corresponding to the target logic gate includes at least one logic gate; and calling, according to the target logic gate and the subsequent sequential logic gate corresponding thereto, a query process to perform query in the corresponding subcircuit to determine, in the subcircuit, a subcircuit matching the target logic gate and the subsequent sequential logic gate corresponding thereto.

In the above manner, at least one subcircuit matching the target logic gate and the subsequent sequential logic gate corresponding thereto may be determined in the subcircuits. If the subcircuits have only one matching subcircuit, it is further judged whether other logic gates of the matching subcircuit and corresponding time sequences thereof match the subcircuit. If yes, the matching subcircuit is the to-be-replaced subcircuit.

If the subcircuits have a plurality of matching subcircuits, the target subcircuit is updated according to the subcircuit corresponding to the target logic gate and the subsequent sequential logic gate corresponding thereto. That is, subcircuits in the subcircuit corresponding to the target logic gate and the subsequent sequential logic gate corresponding thereto are sequentially acquired as the target subcircuit respectively, and the target logic gate is updated according to a logic gate in the subsequent sequential logic gate. That is, logic gates in the subsequent sequential logic gate are sequentially acquired as the target logic gate respectively. Therefore, in a plurality of matching subcircuits screened out, further screening is performed based on a logic gate in the subsequent sequential logic gate and a subsequent sequential logic gate corresponding thereto, and the rest is done by analogy to continuously reduce query circuits until the to-be-replaced subcircuit is determined. In the above manner, a number of subcircuits to be queried is reduced, and the query efficiency is further improved.

Through the processing in step 301 and step 302, the quantum circuit of the second quantum computing task is optimized as the above new quantum circuit, and correspondingly, step 203 is adaptively modified to the following step 303.

In step 303, the second physical qubits are determined based on the current topological structure and the new quantum circuit of the second quantum computing task.

Compared with the related art, according to the quantum computing task execution method provided in this embodiment, when the target quantum circuit meets the preset dividing condition, the target quantum circuit is divided into the target number of subcircuits according to the preset dividing rule. A to-be-replaced subcircuit is determined in the subcircuits based on the topological sequence of the target quantum circuit, and the to-be-replaced subcircuit is replaced. In the above manner, replacement of some subcircuits in the quantum circuit of the second quantum computing task is realized. Moreover, in this embodiment, the target quantum circuit is divided into a plurality of subcircuits, and then parallel query is performed on the plurality of subcircuits, which shortens the time for querying the target quantum circuit for the to-be-replaced subcircuit and improves query efficiency of the to-be-replaced subcircuit, thereby improving circuit replacement efficiency.

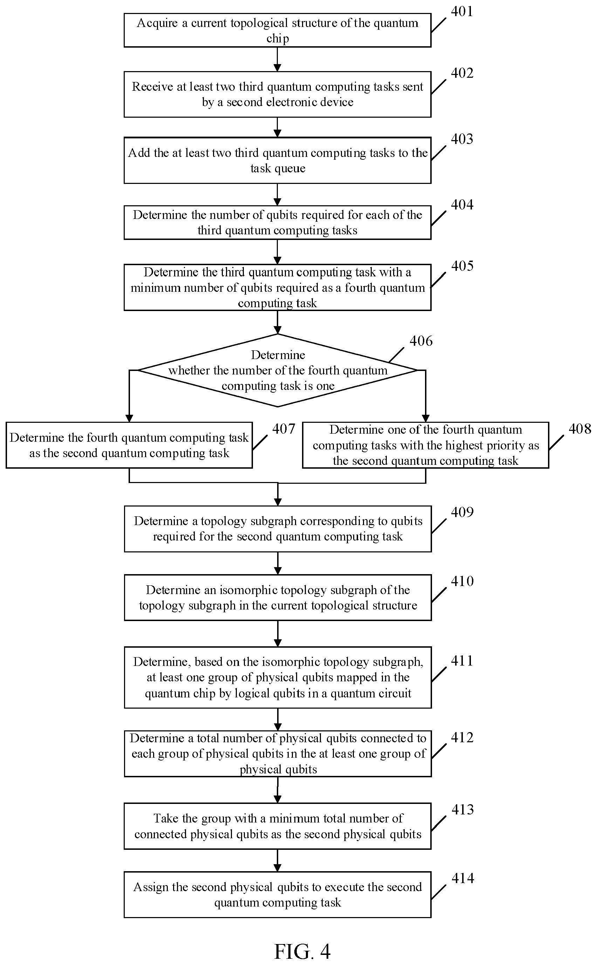

Referring to FIG. 4, FIG. 4 is a schematic flowchart of another quantum computing task execution method according to some embodiments of the present disclosure, applied to a first electronic device including a quantum chip. First physical qubits in the quantum chip are assigned to execute a first quantum computing task, at least two first quantum computing tasks are provided, the at least two first quantum computing tasks are executed synchronously on the quantum chip, and the first physical qubits assigned by the first electronic device to each of the first quantum computing tasks do not interfere with each other. The method includes the following steps.

In step 401, a current topological structure of the quantum chip is acquired.

In step 402, at least two third quantum computing tasks sent by a second electronic device are received.

In step 403, the at least two third quantum computing tasks are added to the task queue.

In step 404, the number of qubits required for each of the third quantum computing tasks is determined.

In step 405, the third quantum computing task with a minimum number of qubits required is determined as a fourth quantum computing task.

In step 406, it is determined whether the number of the fourth quantum computing task is one.

If yes, step 407 is performed.

If not, step 408 is performed.

In step 407, the fourth quantum computing task is determined as the second quantum computing task, and step 409 is performed.

In step 408, one of the fourth quantum computing tasks with the highest priority is determined as the second quantum computing task, the priority is determined based on a waiting time and an execution time of the quantum computing task, and step 409 is performed.

In step 409, a topology subgraph corresponding to qubits required for the second quantum computing task is determined.

In step 410, an isomorphic topology subgraph of the topology subgraph in the current topological structure is determined.

In step 411, at least one group of physical qubits mapped in the quantum chip by logical qubits in a quantum circuit is determined based on the isomorphic topology subgraph.

In step 412, a total number of physical qubits connected to each group of physical qubits in the at least one group of physical qubits is determined.

In step 413, the group with a minimum total number of connected physical qubits is taken as the second physical qubits, and the second physical qubits and the first physical qubits do not interfere with each other.

In step 414, the second physical qubits are assigned to execute the second quantum computing task.

It is to be noted that a specific implementation process of this embodiment may be obtained with reference to the specific implementation process described in the above method embodiments. Details are not described herein again.

In some other embodiments provided in the present disclosure, after the second quantum computing task is determined in step 407 and step 408, before the topology subgraph corresponding to the qubits required for the second quantum computing task is determined in step 409, step 301 and step 302 above may also be performed, so as to optimize the quantum circuit of the second quantum computing task to obtain a new quantum circuit of the second quantum computing task. Correspondingly, in step 409, the topology subgraph corresponding to the qubits required for the second quantum computing task may be determined according to the new quantum circuit of the second quantum computing task. Specific implementation may be obtained with reference to the corresponding descriptions in step 301 and step 302 above. Details are not described here.

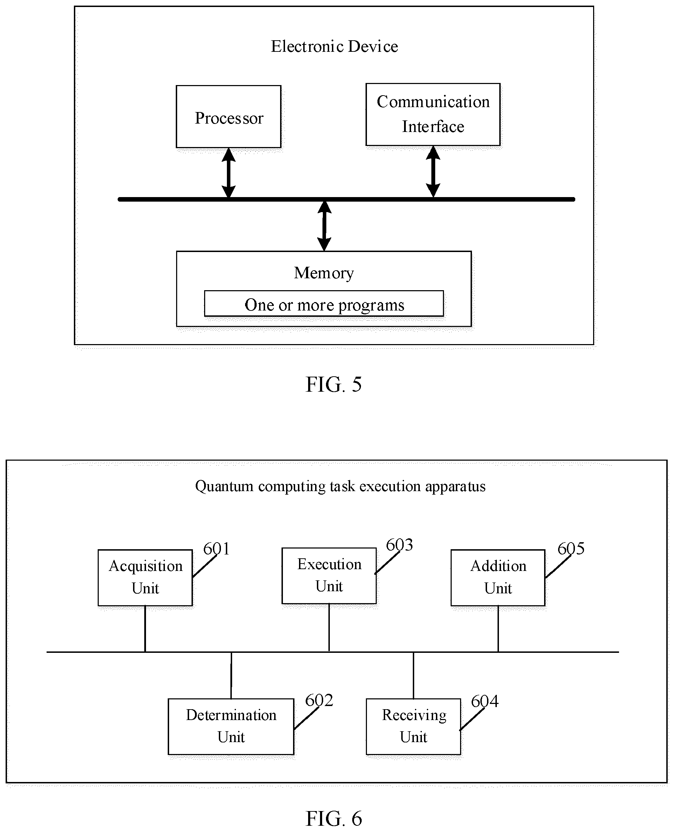

In connection with the embodiments shown in FIG. 2A, FIG. 3 and FIG. 4, referring to FIG. 5, FIG. 5 is a schematic structural diagram of an electronic device according to some embodiments of the present disclosure, applied to a first electronic device including a quantum chip, wherein first physical qubits in the quantum chip are assigned to execute a first quantum computing task. As shown in FIG. 5, the electronic device includes a processor, a memory, a communication interface, and one or more programs. The one or more programs are stored in the above memory and configured to be executed by the above processor. The above program includes instructions, when executed, to perform the following steps: acquiring a current topological structure of the quantum chip; acquiring a second quantum computing task in a task queue; determining second physical qubits based on the current topological structure and the second quantum computing task, wherein the second physical qubits and the first physical qubits do not interfere with each other; and assigning the second physical qubits to execute the second quantum computing task.

In some embodiments of the present disclosure, at least two first quantum computing tasks are provided, the at least two first quantum computing tasks are executed synchronously on the quantum chip, and the first physical qubits assigned by the first electronic device to each of the first quantum computing tasks do not interfere with each other.

In some embodiments of the present disclosure, in the determining second physical qubits based on the current topological structure and the second quantum computing task, the above program includes instructions, when executed, to perform the following steps: determining a topology subgraph corresponding to qubits required for the second quantum computing task; determining an isomorphic topology subgraph of the topology subgraph in the current topological structure; determining, based on the isomorphic topology subgraph, at least one group of physical qubits mapped in the quantum chip by logical qubits in a quantum circuit; and determining one group from the at least one group of physical qubits as the second physical qubits.

In some embodiments of the present disclosure, in the determining one group from the at least one group of physical qubits as the second physical qubits, the above program includes instructions, when executed, to perform the following steps: determining a total number of physical qubits connected to each group of physical qubits in the at least one group of physical qubits; and taking the group with a minimum total number of connected physical qubits as the second physical qubits.

In some embodiments of the present disclosure, prior to the acquiring a second quantum computing task in a task queue, the above program includes instructions further used to perform the following steps: receiving at least two third quantum computing tasks sent by a second electronic device; adding the at least two third quantum computing tasks to the task queue; and determining the second quantum computing task from the at least two third quantum computing tasks based on a number of qubits required and a priority of the quantum computing task, the priority is determined based on a waiting time and an execution time of the quantum computing task.

In some embodiments of the present disclosure, in the determining the second quantum computing task from the at least two third quantum computing tasks based on a number of qubits required and a priority of the quantum computing task, the above program includes instructions, when executed, to perform the following steps: determining the number of qubits required for each of the third quantum computing tasks; determining the third quantum computing task with a minimum number of qubits required as a fourth quantum computing task; determining, if the number of the fourth quantum computing task is one, take the fourth quantum computing task as the second quantum computing task; and determining, if the number of the fourth quantum computing tasks is at least two, take one of the at least two fourth quantum computing tasks with the highest priority as the second quantum computing task.

In some embodiments of the present disclosure, prior to the determining second physical qubits based on the current topological structure and the second quantum computing task, the above program further includes instructions, when executed, to perform the following steps: taking a quantum circuit of the second quantum computing task as a target quantum circuit, and when the target quantum circuit meets a preset dividing condition, dividing the target quantum circuit into a target number of subcircuits according to a preset dividing rule; and calling, based on a topological sequence of a to-be-replaced subcircuit, a plurality of query processes to perform parallel query in the subcircuits to determine the to-be-replaced subcircuit, and replacing the to-be-replaced subcircuit to obtain a new quantum circuit of the second quantum computing task.

The determining second physical qubits based on the current topological structure and the second quantum computing task includes: determining the second physical qubits based on the current topological structure and the new quantum circuit of the second quantum computing task.

In some embodiments of the present disclosure, in the dividing the target quantum circuit into a target number of subcircuits according to a preset dividing rule, the above program includes instructions, when executed, to perform the following steps: acquiring a number of current idle processes, wherein the number of the current idle processes equals to a number of currently callable query processes; and determining the target number according to a preset dividing unit and/or the number of current idle processes, and dividing the target quantum circuit into the target number of subcircuits.

In some embodiments of the present disclosure, in the determining the target number according to a preset dividing unit and/or the number of current idle processes, the above program includes instructions, when executed, to perform the following steps: calculating a number of first subcircuits corresponding to the target quantum circuit, wherein the target quantum circuit is divided according to the preset dividing unit to obtain the number of first subcircuits; and determining a maximum value between the number of first subcircuits and the number of current idle processes as the target number.

In some embodiments of the present disclosure, in the dividing the target quantum circuit into the target number of subcircuits, the above program includes instructions, when executed, to perform the following step: dividing the target quantum circuit into the target number of subcircuits, wherein adjacent subcircuits have an overlapping circuit, and a circuit depth of the overlapping circuit is no less than the to-be-replaced subcircuit.

In some embodiments of the present disclosure, the above program further includes instructions, when executed, to perform the following step: acquiring a circuit depth of the target quantum circuit, and when the circuit depth of the target quantum circuit is no less than a preset depth threshold, determining that the target quantum circuit meets the preset dividing condition, wherein the preset depth threshold is no less than a preset multiple of a circuit depth of the to-be-replaced subcircuit.

In some embodiments of the present disclosure, in the calling, based on a topological sequence of a to-be-replaced subcircuit, a plurality of query processes to perform parallel query in the subcircuits to determine the to-be-replaced subcircuit, the above program includes instructions, when executed, to perform the following steps: determining logic gates in the to-be-replaced subcircuit and corresponding time sequences thereof based on the topological sequence; and calling the plurality of query processes to perform parallel query in the subcircuits respectively, according to the logic gates in the to-be-replaced subcircuit and the corresponding time sequences thereof, to determine the to-be-replaced subcircuit in the subcircuits.

It is to be noted that a specific implementation process of this embodiment may be obtained with reference to the specific implementation process described in the above method embodiments. Details are not described herein again.

In the embodiments of the present disclosure, the electronic device may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that, in the embodiments of the present disclosure, division into units is an example, and is merely a logical function division. In an actual implementation, another division manner may be used.

The following are apparatus embodiments of the present disclosure. The apparatus embodiments of the present disclosure are used to perform the method implemented by the method embodiments of the present disclosure. Referring to FIG. 6, FIG. 6 is a schematic structural diagram of a quantum computing task execution apparatus according to some embodiments of the present disclosure, applied to a first electronic device including a quantum chip. First physical qubits in the quantum chip are assigned to execute a first quantum computing task, and the apparatus includes: an acquisition unit 601 configured to acquire a current topological structure of the quantum chip, and acquire a second quantum computing task in a task queue; a determination unit 602 configured to determine second physical qubits based on the current topological structure and the second quantum computing task, wherein the second physical qubits and the first physical qubits do not interfere with each other; and an execution unit 603 configured to assign the second physical qubits to execute the second quantum computing task.

In some embodiments of the present disclosure, at least two first quantum computing tasks are provided, the at least two first quantum computing tasks are executed synchronously on the quantum chip, and the first physical qubits assigned by the first electronic device to each of the first quantum computing tasks do not interfere with each other.

In some embodiments of the present disclosure, in the determining second physical qubits based on the current topological structure and the second quantum computing task, the determination unit 602 is configured to: determine a topology subgraph corresponding to qubits required for the second quantum computing task; determine an isomorphic topology subgraph of the topology subgraph in the current topological structure; determine, based on the isomorphic topology subgraph, at least one group of physical qubits mapped in the quantum chip by logical qubits in a quantum circuit; and determine one group from the at least one group of physical qubits as the second physical qubits.

In some embodiments of the present disclosure, in the determining one group from the at least one group of physical qubits as the second physical qubits, the determination unit 602 is configured to: determine a total number of physical qubits connected to each group of physical qubits in the at least one group of physical qubits; and take the group with a minimum total number of connected physical qubits as the second physical qubits.

In some embodiments of the present disclosure, prior to the acquiring a second quantum computing task in a task queue, the apparatus further includes a receiving unit 604 and an addition unit 605.

The receiving unit 604 is configured to receive at least two third quantum computing tasks sent by a second electronic device.

The addition unit 605 is configured to add the at least two third quantum computing tasks to the task queue.

The determination unit 602 is further configured to determine the second quantum computing task from the at least two third quantum computing tasks based on a number of qubits required and a priority of the quantum computing task, wherein the priority is determined based on a waiting time and an execution time of the quantum computing task.

In some embodiments of the present disclosure, in the determining the second quantum computing task from the at least two third quantum computing tasks based on a number of qubits required and a priority of the quantum computing task, the determination unit 602 is configured to: determine the number of qubits required for each of the third quantum computing tasks; determine the third quantum computing task with a minimum number of qubits required as a fourth quantum computing task; determine, if the number of the fourth quantum computing task is one, take the fourth quantum computing task as the second quantum computing task; and determine, if the number of the fourth quantum computing tasks is at least two, take one of the at least two fourth quantum computing tasks with the highest priority as the second quantum computing task.

In some embodiments of the present disclosure, as shown in FIG. 6, prior to the determining second physical qubits based on the current topological structure and the second quantum computing task, the apparatus further includes a circuit dividing module 606 and a circuit replacement module 607.

The circuit dividing module 606 is configured to take a quantum circuit of the second quantum computing task as a target quantum circuit, and when the target quantum circuit meets a preset dividing condition, divide the target quantum circuit into a target number of subcircuits according to a preset dividing rule.

The circuit replacement module 607 is configured to call, based on a topological sequence of a to-be-replaced subcircuit, a plurality of query processes to perform parallel query in the subcircuits to determine the to-be-replaced subcircuit, and replace the to-be-replaced subcircuit to obtain a new quantum circuit of the second quantum computing task.

The determining second physical qubits based on the current topological structure and the second quantum computing task includes: determining the second physical qubits based on the current topological structure and the new quantum circuit of the second quantum computing task.

In some embodiments of the present disclosure, in the dividing the target quantum circuit into a target number of subcircuits according to a preset dividing rule, the circuit dividing module 606 includes: a number acquisition unit configured to acquire a number of current idle processes, wherein the number of the current idle processes equals to a number of currently callable query processes; and a circuit dividing unit configured to determine the target number according to a preset dividing unit and/or the number of current idle processes, and divide the target quantum circuit into the target number of subcircuits.

In some embodiments of the present disclosure, in the determining the target number according to a preset dividing unit and/or the number of current idle processes, the circuit dividing unit includes: a number calculation subunit configured to calculate a number of first subcircuits corresponding to the target quantum circuit, wherein the target quantum circuit is divided according to the preset dividing unit to obtain the number of first subcircuits; and a number determination subunit configured to determine a maximum value between the number of first subcircuits and the number of current idle processes as the target number.

In some embodiments of the present disclosure, in the dividing the target quantum circuit into a target number of subcircuits according to a preset dividing rule, the circuit dividing unit further includes: a circuit dividing subunit configured to divide the target quantum circuit into the target number of subcircuits, wherein adjacent subcircuits have an overlapping circuit, and a circuit depth of the overlapping circuit is no less than the to-be-replaced subcircuit.

In some embodiments of the present disclosure, the apparatus further includes: a circuit judgment module configured to acquire a circuit depth of the target quantum circuit, and when the circuit depth of the target quantum circuit is no less than a preset depth threshold, determine that the target quantum circuit meets the preset dividing condition, wherein the preset depth threshold is no less than a preset multiple of a circuit depth of the to-be-replaced subcircuit.

In some embodiments of the present disclosure, in the calling, based on a topological sequence of a to-be-replaced subcircuit, a plurality of query processes to perform parallel query in the subcircuits to determine the to-be-replaced subcircuit, the circuit replacement module includes: a circuit determination unit configured to determine logic gates in the to-be-replaced subcircuit and corresponding time sequences thereof based on the topological sequence; and a circuit replacement unit configured to call the plurality of query processes to perform parallel query in the subcircuits respectively, according to the logic gates in the to-be-replaced subcircuit and the corresponding time sequences thereof, to determine the to-be-replaced subcircuit in the subcircuits.

It is to be noted that the acquisition unit 601, the determination unit 602, the execution unit 603, the addition unit 605, the circuit division module 606, and the circuit replacement module 607 may be implemented through a processor, and the receiving unit 604 may be implemented through a communication interface.

Some embodiments of the present disclosure further provide a computer-readable storage medium. The computer-readable storage medium stores a computer program for electronic data exchange. The computer program causes a computer to perform some or all steps of any method described in the above method embodiments. The computer includes an electronic device.

Some embodiments of the present disclosure further provide a computer program product. The computer program product includes a non-transitory computer-readable storage media storing a computer program. The computer program is operable to cause a computer to perform some or all steps of any method described in the above method embodiments. The computer program product may be a software installation package, and the above computer includes an electronic device.

Some embodiments of the present disclosure further provide a quantum computer operating system. The quantum computer operating system implements adaptation of the quantum computing platform according to some or all steps of any method described in the above method embodiments.

It is to be noted that, to make the description brief, the foregoing method embodiments are expressed as a series of actions. However, those skilled in the art should appreciate that the present disclosure is not limited to the described action sequence, because according to the present disclosure, some steps may be performed in other sequences or performed simultaneously. In addition, those skilled in the art should also appreciate that all the embodiments described in the specification are preferred embodiments, and the actions and modules involved are not necessarily mandatory to the present disclosure.

In the above embodiments, the descriptions of the embodiments have respective focuses. For a part that is not described in detail in one embodiment, refer to related descriptions in other embodiments.

In the several embodiments provided in the present disclosure, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may be or may not be physically separate, and parts displayed as units may be or may not be physical units, may be located in one position, or may be distributed on a plurality of network units. Some or all of the units may be selected based on actual requirements to achieve the objective of the solution of this embodiment.

In addition, functional units in various embodiments of the present disclosure may be integrated into one processing unit, or each of the units may exist alone physically, or two or more units are integrated into one unit. The above integrated units may be implemented in the form of hardware or software functional units.

The above integrated units, if implemented in the form of software functional unit and sold or used as an independent product, may be stored in a computer-readable memory. Based on such understanding, the technical solution of the present disclosure essentially, or the part contributing to the related art, or all or some of the technical solution may be implemented in the form of a software product. The computer software product is stored in a memory, and includes several instructions for instructing a computer device (which may be a personal computer, a server, a network device, or the like) to perform all or some of the steps of the methods described in various embodiments of the present disclosure. The foregoing memory includes: various media that can store program code, such as a USB flash drive, a read-only memory (ROM), a random access memory (RAM), a removable hard disk, a magnetic disk, or an optical disc.

Those of ordinary skill in the art may understand that all or some of the steps of the methods in the above embodiments may be implemented by a program instructing relevant hardware. The program may be stored in a computer-readable memory. The memory may include a flash memory, a ROM, a RAM, a magnetic disk, an optical disc, or the like.

The embodiments of the present disclosure are described in detail above. The principle and embodiments of the present disclosure are described herein through specific examples. The description about the embodiments is merely provided to help understand the method and core ideas of the present disclosure. In addition, those of ordinary skill in the art can make variations to the present disclosure in terms of the specific embodiments and application scopes based on the ideas of the present disclosure. Therefore, the content of this specification shall not be construed as a limitation on the present disclosure.

**Claims**

1. A quantum computing task execution method, applied to a first electronic device comprising a quantum chip, wherein first physical qubits in the quantum chip are assigned to execute a first quantum computing task, and the method comprises:

   acquiring a current topological structure of the quantum chip;
   acquiring a second quantum computing task in a task queue;
   determining second physical qubits based on the current topological structure and the second quantum computing task, wherein the second physical qubits and the first physical qubits do not interfere with each other; and
   assigning the second physical qubits to execute the second quantum computing task.

2. The method according to claim 1, wherein at least two first quantum computing tasks are provided, the at least two first quantum computing tasks are executed synchronously on the quantum chip, and the first physical qubits assigned by the first electronic device to each of the first quantum computing tasks do not interfere with each other.

3. The method according to claim 1, wherein the determining second physical qubits based on the current topological structure and the second quantum computing task comprises:

   determining a topology subgraph corresponding to qubits required for the second quantum computing task;
   determining an isomorphic topology subgraph of the topology subgraph in the current topological structure;
   determining, based on the isomorphic topology subgraph, at least one group of physical qubits mapped in the quantum chip by logical qubits in a quantum circuit of the second quantum computing task; and
   determining one group from the at least one group of physical qubits as the second physical qubits.

4. The method according to claim 3, wherein the determining one group from the at least one group of physical qubits as the second physical qubits comprises:

   determining a total number of physical qubits connected to each group of physical qubits in the at least one group of physical qubits; and
   taking the group with a minimum total number of connected physical qubits as the second physical qubits.

5. The method according to any one of claims 1 to 4, wherein, prior to the acquiring a second quantum computing task in a task queue, the method further comprises:

   receiving at least two third quantum computing tasks sent by a second electronic device;
   adding the at least two third quantum computing tasks to the task queue; and
   determining the second quantum computing task from the at least two third quantum computing tasks based on a number of qubits required and a priority of the quantum computing task, wherein the priority is determined based on a waiting time and an execution time of the quantum computing task.

6. The method according to claim 5, wherein the determining the second quantum computing task from the at least two third quantum computing tasks based on a number of qubits required and a priority of the quantum computing task comprises:

   determining the number of qubits required for each of the third quantum computing tasks;
   determining the third quantum computing task with a minimum number of qubits required as a fourth quantum computing task;
   determining, if the number of the fourth quantum computing task is one, take the fourth quantum computing task as the second quantum computing task; and
   determining, if the number of the fourth quantum computing tasks is at least two take one of the at least two fourth quantum computing tasks with the highest priority as the second quantum computing task.

7. The method according to any one of claims 1 to 4, wherein, prior to the determining second physical qubits based on the current topological structure and the second quantum computing task, the method further comprises:

taking a quantum circuit of the second quantum computing task as a target quantum circuit, and when the target quantum circuit meets a preset dividing condition, dividing the target quantum circuit into a target number of subcircuits according to a preset dividing rule; and
calling, based on a topological sequence of a to-be-replaced subcircuit, a plurality of query processes to perform parallel query in the subcircuits of the target quantum circuit to determine a subcircuit replaceable by the to-be-replaced subcircuit, and replacing the subcircuit by the to-be-replaced subcircuit to obtain a new quantum circuit of the second quantum computing task; and
the determining second physical qubits based on the current topological structure and the second quantum computing task comprises:
determining the second physical qubits based on the current topological structure and the new quantum circuit of the second quantum computing task.

8. The method according to claim 7, wherein the dividing the target quantum circuit into a target number of subcircuits according to a preset dividing rule comprises:

acquiring a number of current idle processes, wherein the number of the current idle processes equals to a number of currently callable query processes; and
determining the target number according to a preset dividing unit and/or the number of current idle processes, and dividing the target quantum circuit into the target number of subcircuits.

9. The method according to claim 8, wherein the determining the target number according to a preset dividing unit and/or the number of current idle processes comprises:

calculating a number of first subcircuits corresponding to the target quantum circuit, wherein the target quantum circuit is divided according to the preset dividing unit to obtain the number of first subcircuits; and
determining a maximum value between the number of first subcircuits and the number of current idle processes as the target number.

10. The method according to claim 8, wherein the dividing the target quantum circuit into the target number of subcircuits comprises:
dividing the target quantum circuit into the target number of subcircuits, wherein adjacent subcircuits have an overlapping circuit, and a circuit depth of the overlapping circuit is no less than the to-be-replaced subcircuit.

11. The method according to claim 7, further comprising:
acquiring a circuit depth of the target quantum circuit, and when the circuit depth of the target quantum circuit is no less than a preset depth threshold, determining that the target quantum circuit meets the preset dividing condition, wherein the preset depth threshold is no less than a preset multiple of a circuit depth of the to-be-replaced subcircuit.

12. The method according to claim 7, wherein the calling, based on a topological sequence of a to-be-replaced subcircuit, a plurality of query processes to perform parallel query in the subcircuits and determine the subcircuit replaceable by the to-be-replaced subcircuit comprises:

determining logic gates in the to-be-replaced subcircuit and corresponding time sequences thereof based on the topological sequence of the to-be-replaced subcircuit; and
calling the plurality of query processes to perform parallel query in the subcircuits respectively, according to the logic gates in the to-be-replaced subcircuit and the corresponding time sequences thereof, to determine in the subcircuits the subcircuit replaceable by the to-be-replaced subcircuit.

13. A quantum computing task execution apparatus, applied to a first electronic device comprising a quantum chip, wherein first physical qubits in the quantum chip are assigned to execute a first quantum computing task, and the apparatus comprises:

an acquisition unit configured to acquire a current topological structure of the quantum chip, and acquire a second quantum computing task in a task queue;
a determination unit configured to determine second physical qubits based on the current topological structure and the second quantum computing task, wherein the second physical qubits and the first physical qubits do not interfere with each other; and
an execution unit configured to assign the second physical qubits to execute the second quantum computing task.

14. An electronic device, comprising a processor, a memory, a communication interface, and one or more programs stored in the memory and configured to be executed by the processor, the programs comprising instructions, when executed, to perform steps in the method according to any one of claims 1 to 12.

15. A computer-readable storage medium, wherein the computer-readable storage medium stores a computer program, when being executed by a processor, to implement the method according to any one of claims 1 to 12.

16. A quantum computer operating system, wherein the quantum computer operating system executes a quantum computing task according to the method according to any one of claims 1 to 12.

FIG. 1A

FIG. 1B

Acquire a current topological structure of the quantum chip | 201

Acquire a second quantum computing task in a task queue | 202

Determine second physical qubits based on the current topological structure and the second quantum computing task, the second physical qubits and the first physical qubits do not interfere with each other | 203

Assign the second physical qubits to execute the second quantum computing task | 204

FIG. 2A

First physical qubit

FIG. 2B

First physical qubit                    Second physical qubit

FIG. 2C

First physical qubit          Second physical qubit

Isolation Apparatus

FIG. 2D

q[0]        q[1]

q[3]        q[2]

FIG. 2E

Q₁ Q₂

Q₅ Q₆

Q₂ Q₃

Q₆ Q₇

FIG. 2F

q[0] q[1]

q[3] q[2]

FIG. 2G

q[1] ●——● q[0]

q[2] ●——● q[1]

q[2] ●——● q[3]

q[3] ●——● q[0]

q[2] ●——● q[0]

FIG. 2H

q[0] •——• q[1] ⟶ q[0] •——• q[1]

q[1] •——• q[2] ⟶ q[0] q[1]

q[2]

q[2] •——• q[3] ⟶ q[0] q[1]

q[3] q[2] ⟶ First maximum subgraph

q[0] •——• q[3] ⟶ q[3] •——• q[0]

q[0] •——• q[2] ⟶ q[3] q[0] q[2] ⟶ Second maximum subgraph

FIG. 2I

Acquire a current topological structure of the quantum chip — 201

Acquire a second quantum computing task in a task queue — 202

Take a quantum circuit of the second quantum computing task as a target quantum circuit, and when the target quantum circuit meets a preset dividing condition, divide the target quantum circuit into a target number of subcircuits according to a preset dividing rule — 301

Call, based on a topological sequence of a to-be-replaced subcircuit, a plurality of query processes to perform parallel query in the subcircuits of the target quantum circuit to determine a subcircuit replaceable by the to-be-replaced subcircuit, and replace the subcircuit by the to-be-replaced subcircuit to obtain a new quantum circuit of the second quantum computing task — 302

Determine the second physical qubits based on the current topological structure and the new quantum circuit of the second quantum computing task, and the second physical qubits and the first physical qubits do not interfere with each other — 303

Assign the second physical qubits to execute the second quantum computing task — 204

FIG. 3

Acquire a current topological structure of the quantum chip — 401

↓

Receive at least two third quantum computing tasks sent by a second electronic device — 402

↓

Add the at least two third quantum computing tasks to the task queue — 403

↓

Determine the number of qubits required for each of the third quantum computing tasks — 404

↓

Determine the third quantum computing task with a minimum number of qubits required as a fourth quantum computing task — 405

↓

Determine whether the number of the fourth quantum computing task is one — 406

↙ ↘

Determine the fourth quantum computing task as the second quantum computing task — 407

Determine one of the fourth quantum computing tasks with the highest priority as the second quantum computing task — 408

↓

Determine a topology subgraph corresponding to qubits required for the second quantum computing task — 409

↓

Determine an isomorphic topology subgraph of the topology subgraph in the current topological structure — 410

↓

Determine, based on the isomorphic topology subgraph, at least one group of physical qubits mapped in the quantum chip by logical qubits in a quantum circuit — 411

↓

Determine a total number of physical qubits connected to each group of physical qubits in the at least one group of physical qubits — 412

↓

Take the group with a minimum total number of connected physical qubits as the second physical qubits — 413

↓

Assign the second physical qubits to execute the second quantum computing task — 414

FIG. 4

Electronic Device

Processor

Communication
Interface

Memory

One or more programs

FIG. 5

Quantum computing task execution apparatus

Acquisition
Unit
601

Execution
Unit
603

Addition
Unit
605

Determination
Unit
602

Receiving
Unit
604

FIG. 6

Quantum computing task execution apparatus

Acquisition Unit 601

Circuit Replacement Module 607

Execution Unit 603

Addition Unit 605

Circuit Division Module 606

Determination Unit 602

Receiving Unit 604

FIG. 7

## INTERNATIONAL SEARCH REPORT

| | International application No. |
|---|---|
| | **PCT/CN2022/087847** |

| A. | CLASSIFICATION OF SUBJECT MATTER |
|---|---|
| | G06N 10/00(2022.01)i |

According to International Patent Classification (IPC) or to both national classification and IPC

| B. | FIELDS SEARCHED |
|---|---|

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT; ENTXTC, DWPI, ENTXT: 量子, 同步, 干扰, 串扰, 比特, 并行, 线路, 替换, 更新, 拓扑, 调用, 查询, 进程, 距离, 隔离, quantum, disturb, crosstalk, synchronization, parallel, bit, circuit, replace, update, topology, call, query, course, distance, isolation.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020081805 A1 (RIGETTI & CO., INC.) 23 April 2020 (2020-04-23)<br>description, paragraph 0176, and figures 18, 25 | 1-16 |
| X | US 10127499 B1 (RIGETTI & CO., INC.) 13 November 2018 (2018-11-13)<br>description, page 15 paragraph 2 from the bottom, page 16 paragraph 2 | 1-16 |
| A | CN 109800882 A (EAST CHINA INSTITUTE OF COMPUTING TECHNOLOGY 32ND RESEARCH INSTITUTE OF CHINA ELECTRONICS TECHNOLOGY GROUP CORPORATION) 24 May 2019 (2019-05-24)<br>entire document | 1-16 |
| A | US 2018260245 A1 (RIGETTI & CO., INC.) 13 September 2018 (2018-09-13)<br>entire document | 1-16 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 June 2022** | **29 June 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/087847**

| Patent document cited in search report | | | Publication date (day/month/year) | Patent family member(s) | | | Publication date (day/month/year) |
|---|---|---|---|---|---|---|---|
| WO | 2020081805 | A1 | 23 April 2020 | EP | 3867829 | A1 | 25 August 2021 |
| US | 10127499 | B1 | 13 November 2018 | | None | | |
| CN | 109800882 | A | 24 May 2019 | CN | 109800882 | B | 09 October 2020 |
| US | 2018260245 | A1 | 13 September 2018 | EP | 3593296 | A1 | 15 January 2020 |
| | | | | WO | 2018165607 | A1 | 13 September 2018 |
| | | | | EP | 3593296 | A4 | 19 May 2021 |
| | | | | WO | 2018165607 | A4 | 01 November 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110471640

- CN 202110479525